# EUROPEAN PATENT SPECIFICATION

(11) **EP 2 493 033 B1**
(45) Date of publication and mention of the grant of the patent: **30.05.2018**
(21) Application number: 12153313.7
(22) Date of filing: 31.01.2012
(51) Int. Cl.: H01R 24/62, H01R 27/00

(54) **External storage device**
Externe Speichermedien
Périphérique de stockage externe

(30) Priority: 31.01.2011 US 201161438123 P; 31.01.2011 US 201161438139 P; 31.01.2011 US 201161438140 P; 14.02.2011 US 201161442379 P
(43) Date of publication of application: 29.08.2012
(60) Divisional application: 18168629.6
(73) Proprietor: Kuster, Martin, 6318 Walchwil (CH)
(72) Inventor: Kuster, Martin, 6318 Walchwil (CH)
(74) Representative: Phillips & Leigh LLP

(56) References cited:
- TW-U- M 387 417
- US-A1- 2008 067 248
- US-A1- 2008 218 799
- US-A1- 2009 255 991

## Description

### FIELD OF THE INVENTION

The invention relates to mobile storage devices and the like.

### BACKGROUND

Universal serial bus ("USB") sticks consist of a memory data storage device integrated with a USB interface. USB sticks are typically used for similar purposes for which floppy disks or CD-ROMs were previously used. However, USB sticks are smaller, faster, have thousands of times more capacity, and are more durable and reliable. In the case of USB sticks with chip on board ("COB") flash memory, a USB controller and flash memory can be combined into one structure that is embedded into one side of a printed circuit board ("PCB") with the USB connection located on an opposing surface.

The USB standard that governs the design of the USB connections has undergone several revisions since its earliest release in 1994. The first widely adopted version, USB 1.1, specified data rates of 1.5 Mbit/s ("Low-Bandwidth") and 12 Mbit/s ("Full-Bandwidth"). USB 1.1 was replaced by USB 2.0 in 2000. USB 2.0 provided a higher maximum data rate of 480 Mbit/s ("Hi-Speed"). In this version, the USB 2.0 cable has four wires: two wires for power (+5 volts and ground) and a twisted pair of wires for carrying data. In the USB 2.0 design, as well as USB 1.1, data is transmitted in one direction at a time (downstream or upstream).

In 2008, a new USB 3.0 standard was announced. USB 3.0 includes a new "SuperSpeed" bus, which provides a fourth data transfer mode at 5.0 Gbit/s. In order to achieve this increased throughput, the USB 3.0 cable has a total of eight wires: two wires for power (+5 volts and ground), the twisted pair for carrying non-SuperSpeed data (allows backward compatibility with earlier versions of USB devices), and two differential pairs for carrying SuperSpeed data. Full-duplex signaling occurs over the two differential pairs.

To date, adoption of the USB 3.0 standard has been slow due to the need to redesign motherboard hardware that supports the USB 3.0 standard, and the need to revise operating systems to support the USB 3.0 standard. To ease the transition to the USB 3.0 standard, it is desirable to modify existing USB 2.0 COB sticks to also include USB 3.0 connections.

Because the USB 2.0 COB stick configuration has a rectilinear design with the components embedded on one side of the PCB and the USB 2.0 connections positioned flush with the opposing side of the PCB, the shape and configuration does not readily allow the addition of a USB 3.0 connection to the existing USB 2.0 COB stick. With USB 3.0 being the coming standard and much faster than USB 2.0, it is desirable to provide a design that incorporates USB 3.0 connections into existing USB 2.0 COB sticks so that the USB COB stick may connect to either version of the USB standard. Publication no. US 2008/0218799 A1 discloses a dual-personality extended USB (EUSB) system that supports both USB and EUSB memory cards using an extended 9-pin EUSB socket. Publication no. TWM387417U1 discloses a USB connector comprising a substrate having a plurality of first contact pads and a plurality of second contact pads exposed to the substrate, and aconnector having a plurality of slots and a plurality of terminals.

### STATEMENT OF INVENTION

An external storage device in accordance with the present invention and features therefore are defined by the appended claims.

### SUMMARY

Features of the invention may comprise an external storage device having a substrate, a controller electrically coupled to the substrate, at least one memory die stack electrically coupled to the substrate, a plurality of connection fingers electrically coupled to the substrate, and a mounting bar electrically coupled to the substrate. The external storage device may be configured to support at least two USB standards with interfaces that are mechanically different. The mounting bar may be mounted to a component surface of the substrate and may be substantially enclosed by an outer casing that surrounds the substrate. In these features, the external storage device may comprise substantially flat surfaces on all sides. The mounting bar may also comprises a plurality of springs. In some features, the plurality of springs may include a coupling projection positioned proximate an end of each spring. The coupling projections may be configured to extend through a plurality of apertures in the component surface in an uncompressed position.

In other features, the external storage device may comprise the substrate, the controller electrically coupled to the substrate, the memory die stack electrically coupled to the substrate, the plurality of connection fingers electrically coupled to the substrate, and a contact bar electrically coupled to the substrate. The external storage device may be configured to support at least two USB standards with interfaces that are mechanically different. The contact bar may be mounted to a connection surface of the substrate and may also include a cover. In these features, the contact bar comprises a plurality of extensions. In some features, the plurality of extensions may include a coupling projection positioned proximate an end of each extension. The coupling projections may be configured to extend through a plurality of apertures in the cover in an uncompressed position.

The memory die stack may be mounted to the component surface or a connection surface of the substrate. In some features, the external storage device further comprises a plurality of memory die stacks. In these features, at least one of the memory die stacks is attached to a connection surface of the substrate, and at least one of the memory die stacks is attached to a component surface of the substrate. The memory die stacks may each comprise a plurality of dies. In some features, at least two of the memory die stacks are stacked in an overlapping arrangement.

### BRIEF DESCRIPTION OF THE DRAWINGS

Figure 1 is a front perspective view of an external storage device according to certain features of the present invention.
Figure 2 is a front perspective view of the external storage device of Figure 1 with coupling points.
Figure 3 is a perspective view of a contact bar for use with the external storage device of Figure 2.
Figure 4 is a board of the contact bar of Figure 3.
Figure 5 is a cover of the contact bar of Figure 3.
Figure 6 is a bottom view of the contact bar of Figure 3.
Figure 7 is a front perspective view of the board of Figure 4 in use with the external storage device of Figure 2.
Figure 8 is a front perspective view of the contact bar of Figure 3 in use with the external storage device of Figure 2.
Figure 9 is a front perspective view of the board of Figure 4 in use with an external storage device according to other features of the present invention.
Figure 10 is a front perspective view of the board of Figure 4 in use with an external storage device according to other features of the present invention.
Figure 11 is a back perspective view of the external storage device of Figure 2.
Figure 12 is a front perspective view of an external storage device according to other features of the present invention.
Figure 13 is a back perspective view of the external storage device of Figure 12.
Figure 14 is a perspective view of a spring of the mounting bar of the external storage device of Figure 12.
Figure 15 is a perspective view of the mounting bar of the external storage device of Figure 12.
Figure 16 is a side view of the external storage device of Figure 2 with a single memory die stack positioned on a component surface of a substrate, the memory die stack having a single die.
Figure 17 is a side view of the external storage device of Figure 12 with a single memory die stack positioned on a component surface of a substrate, the memory die stack having a single die
Figure 18 is a side view of the external storage device of Figure 2 with two memory die stacks positioned on two surfaces of a substrate, each memory die stack having a single die.
Figure 19 is a side view of the external storage device of Figure 12 with two memory die stacks positioned on two surfaces of a substrate, each memory die stack having a single die.
Figure 20 is a side view of the external storage device of Figure 2 with a single memory die stack positioned on a component surface of a substrate, the memory die stack having two dies.
Figure 21 is a side view of the external storage device of Figure 12 with a single memory die stack positioned on a component surface of a substrate, the memory die stack having two dies.
Figure 22 is a side view of the external storage device of Figure 2 with four memory die stacks positioned on two surfaces of a substrate, each memory die stack having a single die.
Figure 23 is a side view of the external storage device of Figure 12 with four memory die stacks positioned on two surfaces of a substrate, each memory die stack having a single die.
Figure 24 is a side view of the external storage device of Figure 2 with two memory die stacks positioned on two surfaces of a substrate, each memory die stack having two dies.
Figure 25 is a side view of the external storage device of Figure 12 with two memory die stacks positioned on two surfaces of a substrate, each memory die stack having two dies.
Figure 26 is a side view of the external storage device of Figure 2 with two memory die stacks positioned on a component surface of a substrate, each memory die stack having two dies.
Figure 27 is a side view of the external storage device of Figure 12 with two memory die stacks positioned on a component surface of a substrate, each memory die stack having two dies.
Figure 28 is a side view of the external storage device of Figure 2 with two memory die stacks positioned on a connection surface of a substrate, each memory die stack having two dies.
Figure 29 is a side view of the external storage device of Figure 2 with four memory die stacks positioned on two surfaces of a substrate, each memory die stack having two dies.
Figure 30 is a side view of the external storage device of Figure 12 with four memory die stacks positioned on two surfaces of a substrate, each memory die stack having two dies.
Figure 31 is a side view of the external storage device of Figure 2 with two memory die stacks positioned on a component surface of a substrate, each memory die stack having four dies.
Figure 32 is a side view of the external storage device of Figure 12 with two memory die stacks positioned on a component surface of a substrate, each memory die stack having four dies.
Figure 33 is a side view of the memory die stack of the external storage device of Figures 31 or 32, wherein the dies are arranged in a stair step pattern.
Figure 34 is a side view of the memory die stack of the external storage device of Figures 31 or 32, wherein the dies are arranged in an alternating pattern.
Figure 35 is a side perspective view of an external storage device according to other features of the present invention.

### DETAILED DESCRIPTION

The described features of the invention provide external storage devices for use with multiple interface connection standards. While the designs are discussed for use with external storage devices, they are by no means so limited. Rather, features of these designs may be used for other devices that couple to any type of serial bus connection, parallel bus connection, or otherwise as desired.

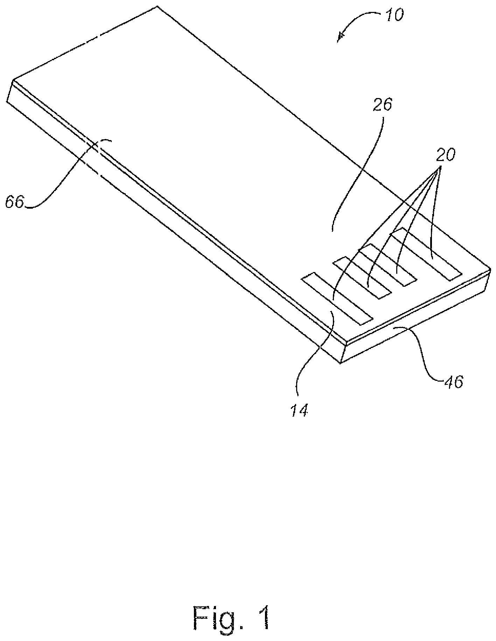

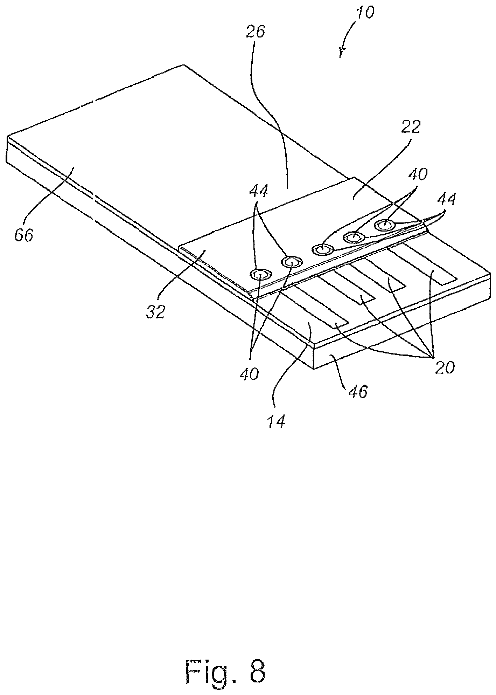

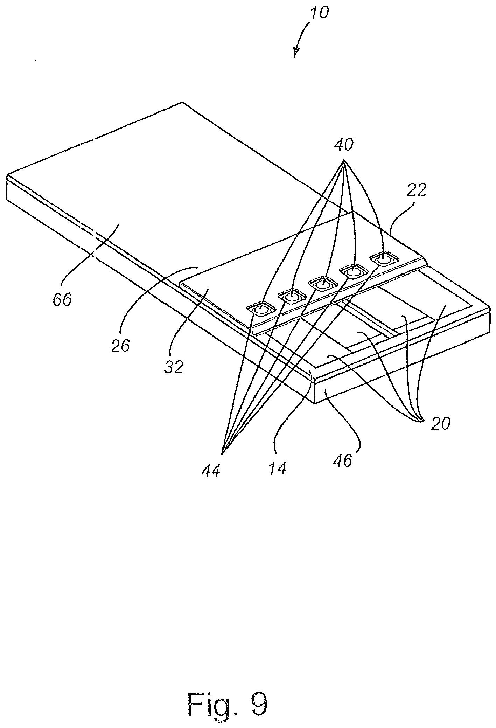

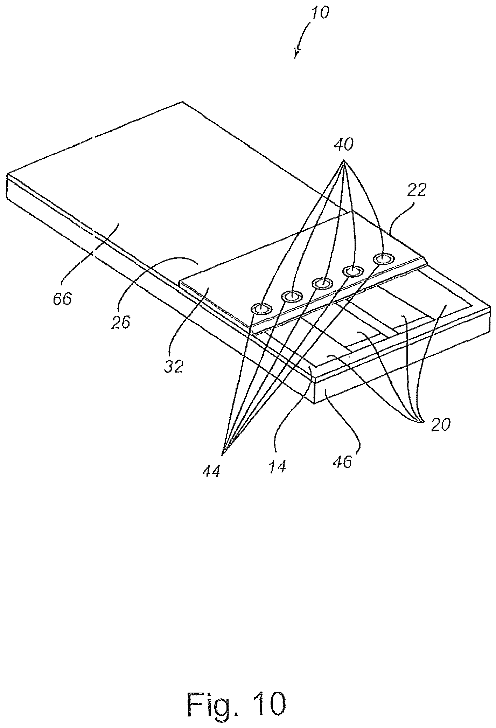

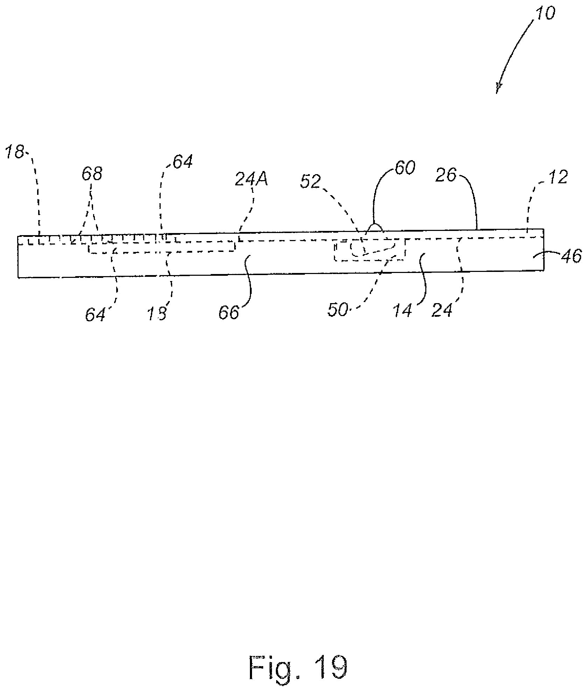

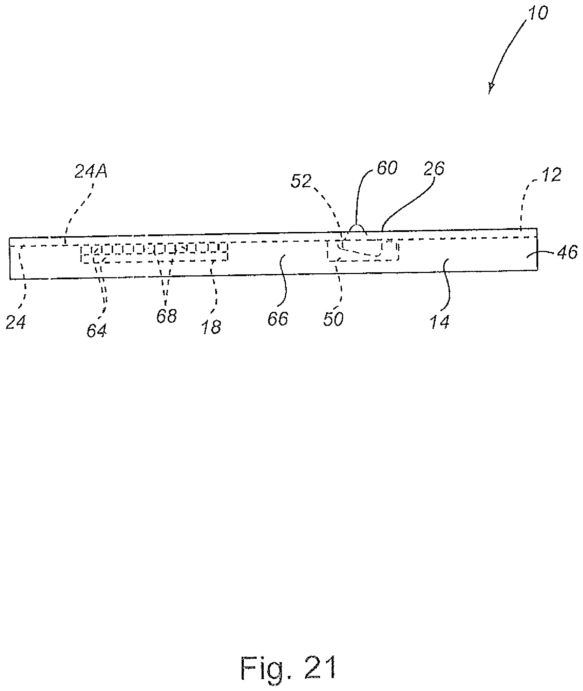

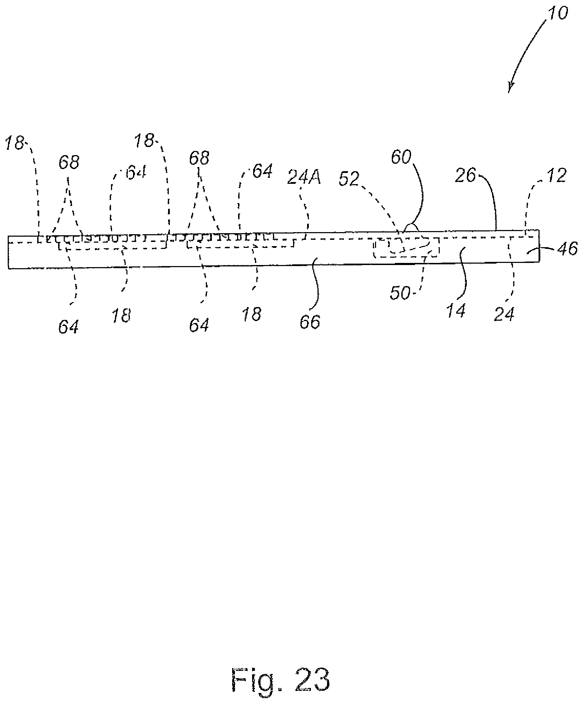

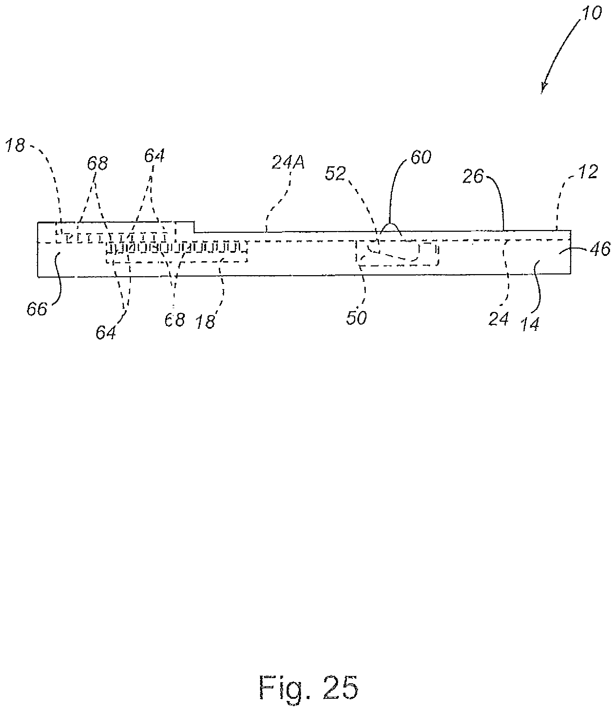

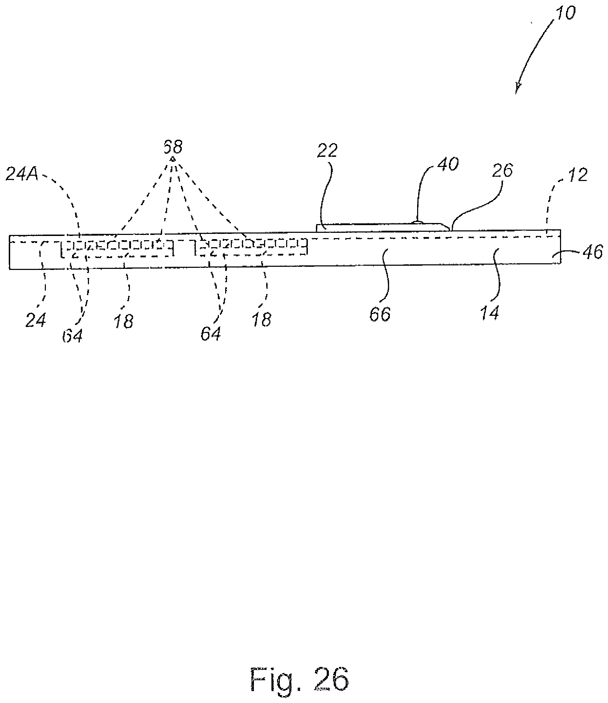

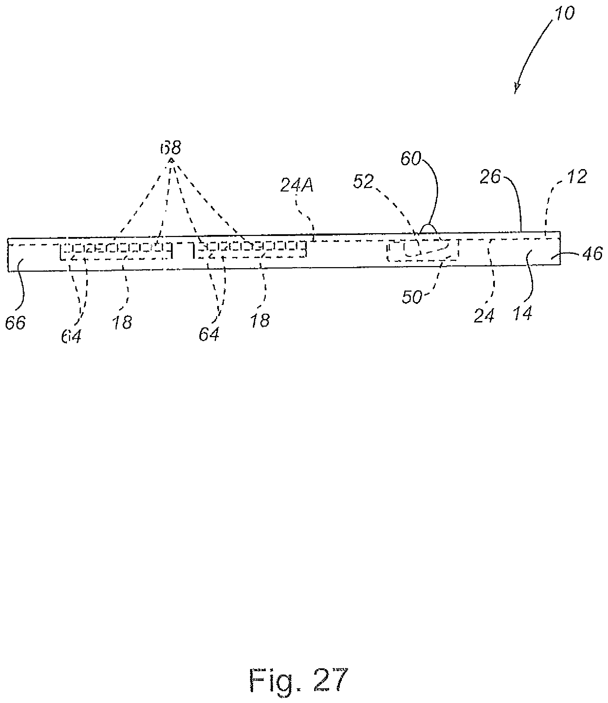

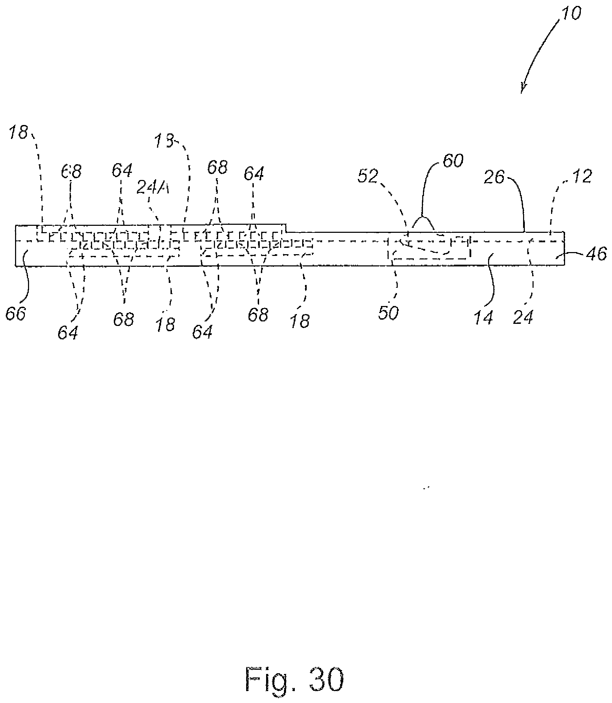

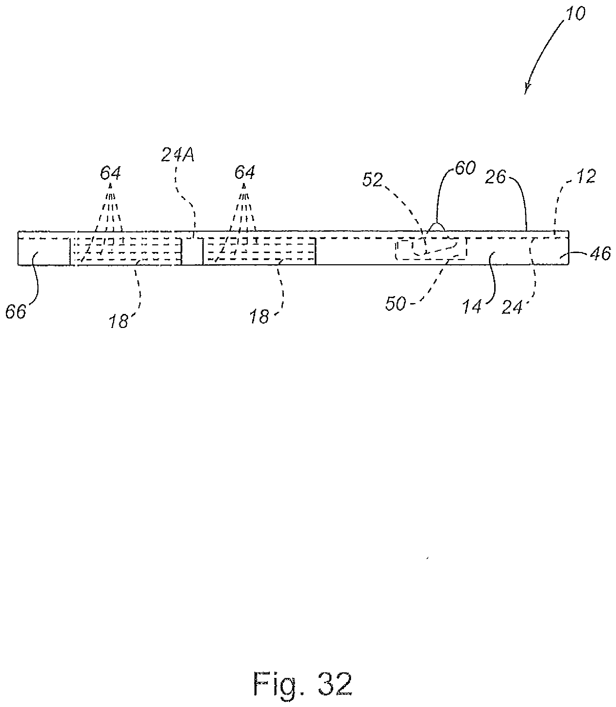

Figures 1-34 illustrate features of an external storage device 10. In the features shown in Figures 8-13, the device 10 comprises a substrate 12, a connector 14, a controller 16, and at least one memory die stack 18.

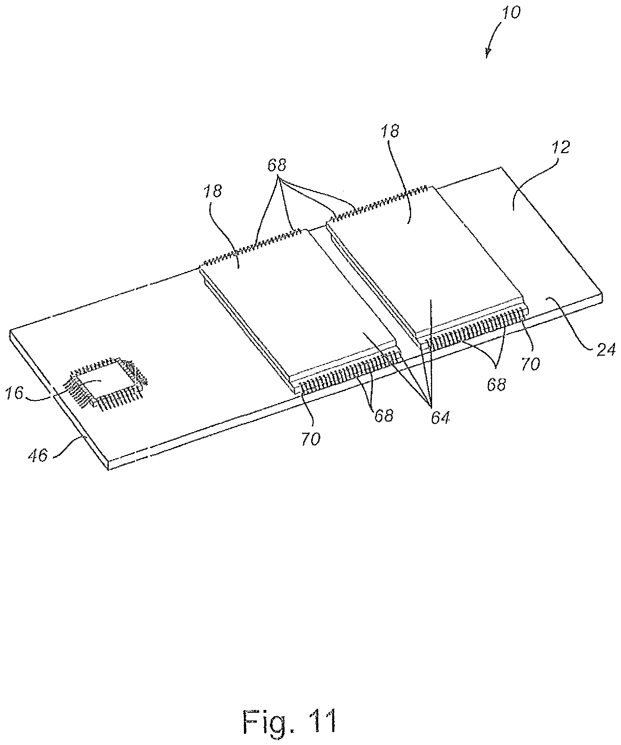

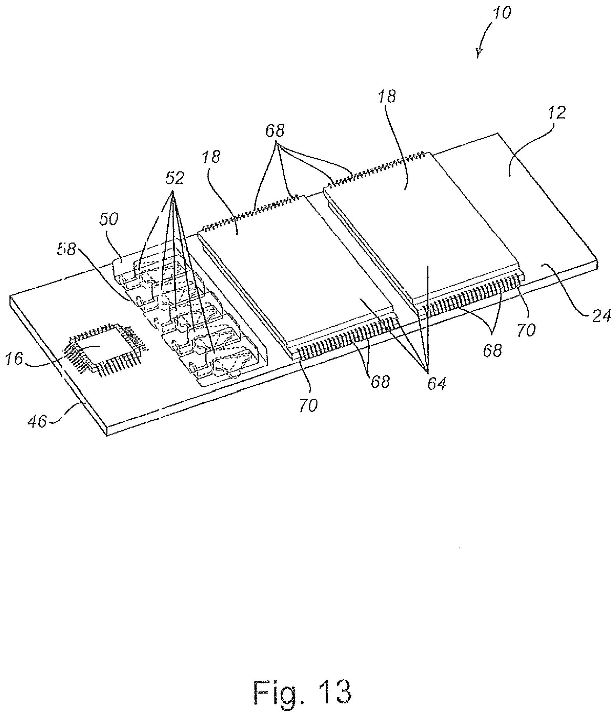

As best shown in Figures 11 and 13, the substrate 12 may be a printed circuit board ("PCB"), which is used to mechanically support and electrically connect the other components of the device 10. In some features, the substrate 12 can include a component surface 24 and a connection surface 26. Items such as an oscillator, an LED status light, discrete components, or other suitable devices, may be mounted and electrically coupled to the component surface 24 and/or the connection surface 26.

In some features, as illustrated in Figures 1-2, 7-10, and 12, the connector 14 may be positioned proximate an end 46 of the substrate 12 and configured to be inserted within a corresponding connector. In certain features, the connector 14 may be configured to couple to a corresponding USB 2.0 connector, USB 3.0 connector, or any other standard that is forward or backwards compatible with any of the foregoing USB standards, other suitable serial bus connection, parallel bus connection, or otherwise as desired. However, one of ordinary skill in the relevant art will understand that the connection standards may be any suitable connection standards that achieve the desired performance of the device 10.

In some features, such as the features illustrated in Figures 8-10, the connector 14 may comprise a plurality of connection fingers 20 and a contact bar 22. In these features, the connection fingers 20 may be mounted to or embedded within the connection surface 26 of the substrate 12 and electrically coupled to the substrate 12. In certain features, such as where the corresponding connector is a USB 2.0 connector or any other standard that is forward or backwards compatible with the USB 2.0 standard, the connection fingers 20 may be configured to electrically couple to the power and ground wires and the twisted pair of wires (for Hi-Speed and lower data transfer) of the corresponding USB 2.0 connector when the connector 14 is inserted within the corresponding USB 2.0 connector. In the features shown in Figures 1-2, 7-10, and 12, the connector 14 may comprise four connection fingers 20. However, one of ordinary skill in the relevant art will understand that any suitable number and configuration of connection fingers 20 may be used in conjunction with the USB 2.0 standard or other suitable standards.

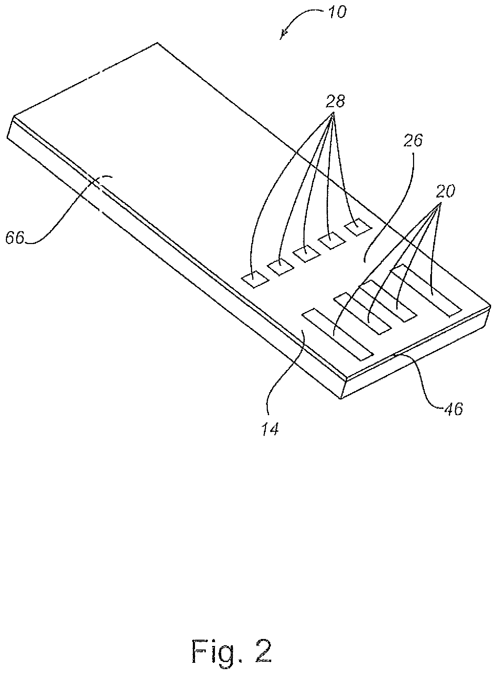

In some features, such as the features shown in Figures 8-10, the contact bar 22 may be mounted to the connection surface 26 and electrically coupled to the substrate 12 via a plurality of coupling points 28. In these features, as shown in Figure 2, the substrate 12 comprises five coupling points 28. However, one of ordinary skill in the relevant art will understand that any suitable number and configuration of coupling points 28 may be used. In other features, the coupling points 28 are configured to electrically couple to other types of additional components. In these features, the contact bar 22 forms a projection on the otherwise substantially flat connection surface 26.

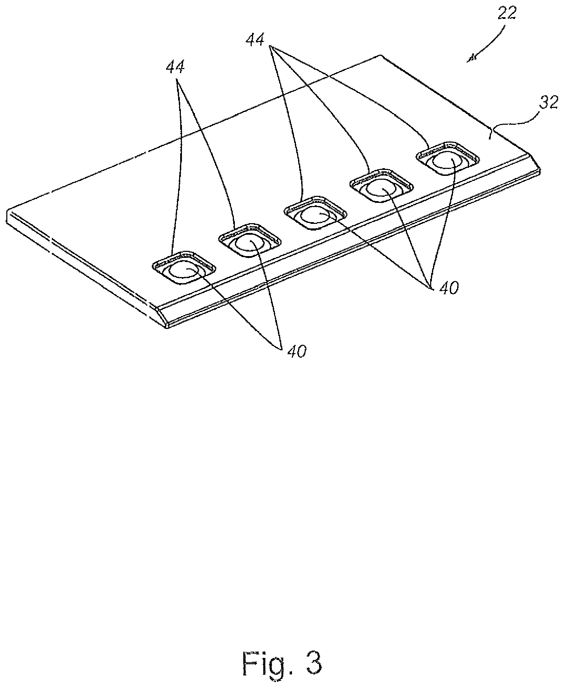

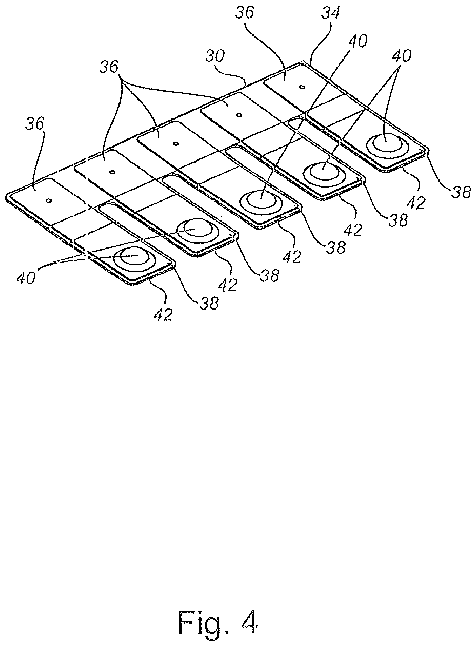

In some features, as best illustrated in Figures 3-6, the contact bar 22 comprises a board 30 and a cover 32. In these features, as shown in Figure 4, the board 30 may be a PCB, where an end 34 of the board 30 can include a plurality of connection pads 36. In some features, the board 30 may comprise five connection pads 36, as shown in Figures 4 and 6-7. However, one of ordinary skill in the relevant art will understand that any suitable number and configuration of connection pads 36 may be used in conjunction with the USB 3.0 standard or other suitable standards.

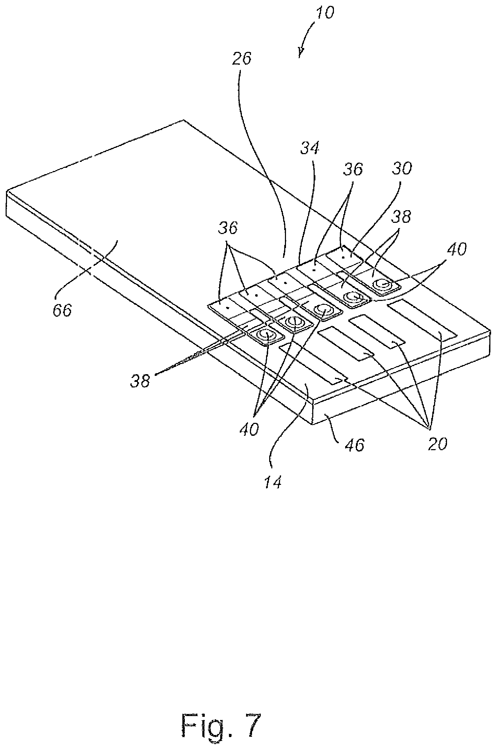

The connection pads 36 may be positioned on the board 30 so as to substantially align with the position of the coupling points 28 when the contact bar 22 is mounted to the connection surface 26, as illustrated in Figure 7. The connection pads 36 may be soldered or otherwise electrically coupled to the coupling points 28 in a suitable manner that allows each connection pad 36 to be electrically connected to the corresponding coupling point 28.

In some features, as shown in Figure 2, the coupling points 28 may be mounted to or embedded within the connection surface 26 of the substrate 12 and electrically coupled to the substrate 12. In these features, the coupling points 28 may be positioned adjacent and/or behind the connection fingers 20. In other features, the coupling points 28 may be mounted to or embedded within the component surface 24, while the connection fingers 20 may be mounted to or embedded within the connection surface 26, or vice versa. One of ordinary skill in the relevant art will understand that the coupling points 28 may be positioned in any suitable location on the substrate 12 that allows the contact bar 22 to electrically couple to the substrate 12.

The board 30 can include a plurality of extensions 38, as best shown in Figures 4 and 6-7. In some features, each extension 38 may also be a PCB having some resilient attributes that cause the extension 38, when bent, to exert a force to return to its original position. One of ordinary skill in the relevant art will understand that the extensions 38 may be made of any suitable material and have any suitable design that allows the contact bar 22 to electrically couple to the corresponding connector when the connector 14 is inserted within the corresponding connector.

In these features, as shown in Figure 4, each extension 38 can include a coupling projection 40 positioned proximate an end 42 of each extension 38. The coupling projection 40 may be soldered or otherwise electrically coupled to the extension 38 in a suitable manner that allows the coupling projection 40 to be electrically coupled to the corresponding connection pad 36. The coupling projection 40 may have any suitable shape that provides sufficient contact with the corresponding connector when the connector 14 is inserted within the corresponding connector. Examples of suitable shapes include but are not limited to a triangular, L-shape, U-shape, T-shape, solid projection having a circular or rectilinear cross-sectional shape, or other suitable shapes.

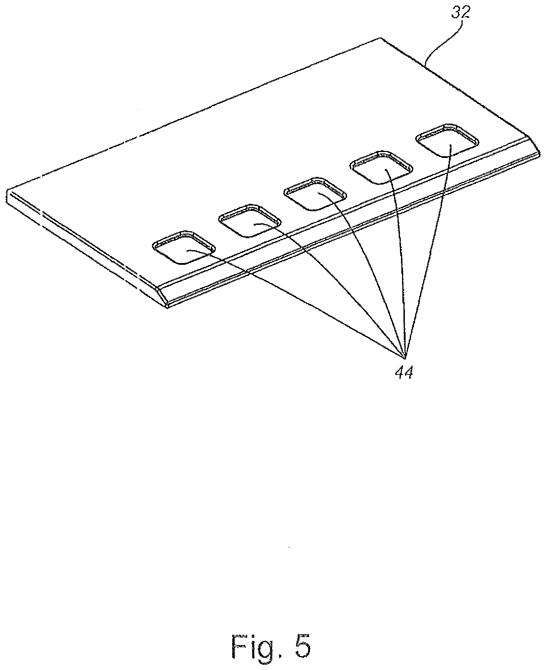

In some features, such as the features illustrated in Figure 3, the cover 32 may be positioned over the board 30. The cover 32 may be formed of materials including but not limited to any high thermal-resistant plastics, polymers, or other suitable materials. As shown in Figures 3 and 5, the cover 32 may also include a plurality of apertures 44 positioned over the plurality of extensions 38 and proximate the end 42 of each extension 38. The apertures 44 are configured to allow the coupling projections 40 to extend through the apertures 44 when the extensions 38 are in an uncompressed position.

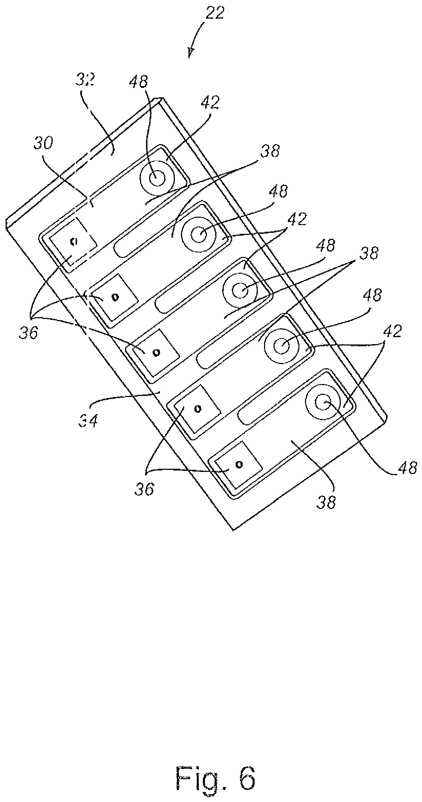

In some features, the connector 14 may be positioned proximate the end 46 of the substrate 12 so that the connection fingers 20 (when inserted within the corresponding USB 2.0 connector or any other standard that is forward or backwards compatible with the USB 2.0 standard) or the connection fingers 20 and coupling projections 40 (when inserted within the corresponding USB 3.0 connector or any other standard that is forward or backwards compatible with the USB 3.0 standard) electrically couple to the corresponding USB connector. When the connector 14 is inserted within the corresponding USB 3.0 connector (not shown), the USB 3.0 connector presses against the coupling projections 40, in turn applying a bending force to the extensions 38. When the extensions 38 are bent by the USB 3.0 connector, the spring-loaded design of each extension 38 then applies a force to the USB 3.0 connector and the coupling projection 40 to ensure that the components are securely and electrically coupled. In some features, as shown in Figure 6, a ball 48 may be positioned on the end 42 of each extension 38 opposite the coupling projection 40. The ball 48 may be formed of materials including but not limited to silicone, normal rubber, latex, or other suitable materials. Moreover, the ball 48 may be a metal spring or a micro spring. One of ordinary skill in the relevant art will understand that the ball 48 may have any suitable construction or form that provides elastic properties to the extension 38. The ball 48 provides additional force to create a firm electrical coupling between the corresponding USB 3.0 connector and each coupling projection 40 when the connector 14 is inserted within the corresponding USB 3.0 connector because the ball 48 is at least partially compressed when the connector 14 is inserted within the corresponding USB 3.0 connector.

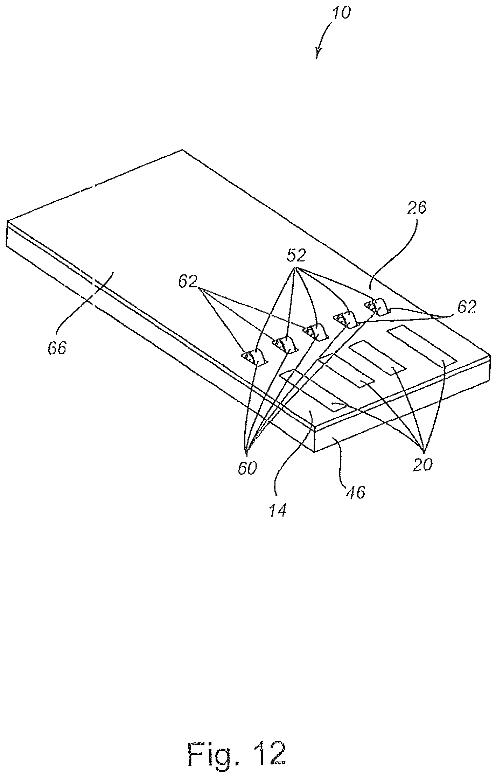

In other features, such as the features shown in Figure 12, the connector 14 may comprise the plurality of connection fingers 20 discussed above, along with a mounting bar 50. As best illustrated in Figure 13, the mounting bar 50 is positioned on the component surface 24 so that the connection surface 26 may remain substantially flat if desirable. In these features, as best shown in Figures 13-15, the mounting bar 50 may comprise a plurality of contact springs 52. Each spring 52 may be formed of a resilient material that, when bent or compressed, exerts a force to return to its original shape. One of ordinary skill in the relevant art will understand that the springs 52 may be made of any suitable material and have any suitable design that allows the mounting bar 50 to electrically couple to the corresponding connector when the connector 14 is inserted within the corresponding connector.

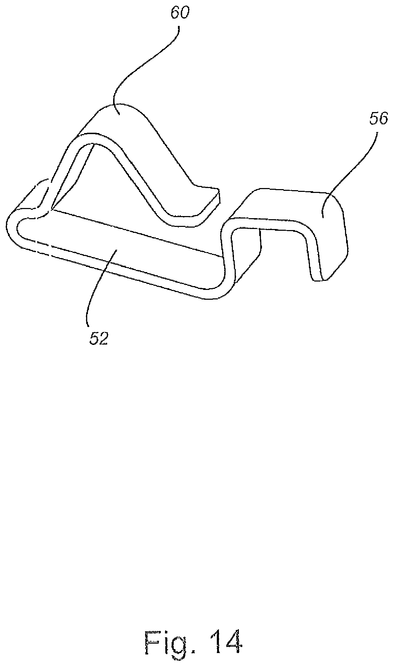

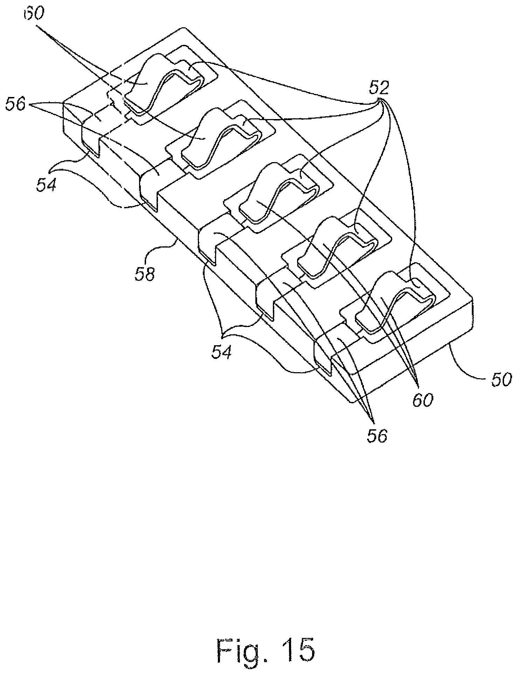

As shown in Figure 15, the mounting bar 50 may also include a plurality of receptacles 54 that are shaped to receive the contact springs 52. As illustrated in Figure 14, each spring 52 may include a hook 56 that mounts and electrically couples the spring 52 to an edge 58 of the mounting bar 50, which is best shown in Figure 15. In some features, such as the features shown in Figure 14, the hook 56 may have a U-shape that substantially conforms to the shape of the edge 58. In other features the hook 56 may be substantially straight and configured to be inserted within a corresponding aperture on the edge 58. One of ordinary skill in the relevant art will understand that any suitable coupling arrangement may be used between the hook 56 and the edge 58.

Each spring 52 may also include a coupling projection 60, as best illustrated in Figures 14-15. In some features, the coupling projection 60 may be integrally formed with the spring 52. In other features, the coupling projection 60 may be soldered or otherwise electrically coupled to the spring 52 in a suitable manner that allows the coupling projection 60 to be electrically coupled to the substrate 12. The coupling projection 60 may have any suitable shape that provides sufficient contact with the corresponding connector when the connector 14 is inserted within the corresponding connector. Examples of suitable shapes include but are not limited to a triangular, L-shape, U-shape, T-shape, solid projection having a circular or rectilinear cross-sectional shape, or other suitable shapes.

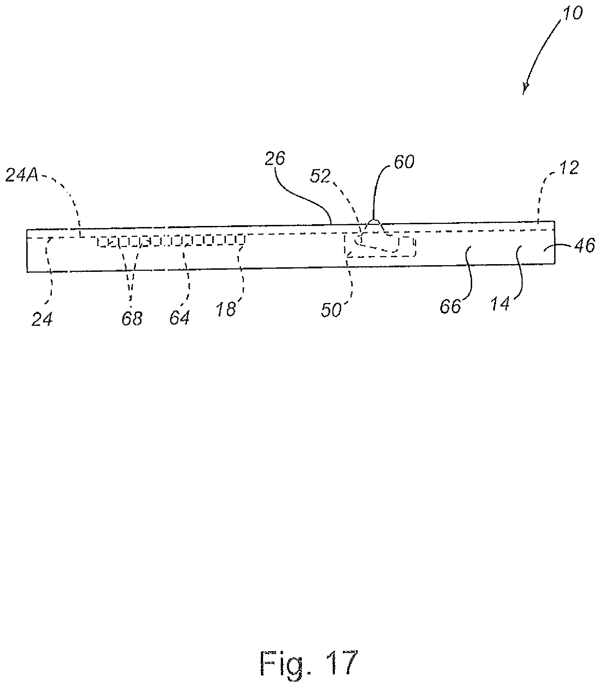

In these features, the mounting bar 50 may be mounted to and electrically coupled directly to the substrate 12. By incorporating the mounting bar 50 within the internal assembly of the device 10, the mounting bar 50 is electrically coupled directly to the substrate 12 without the need to solder the mounting bar 50 to a plurality of coupling points 28. However, one of ordinary skill in the relevant art will understand that any suitable configuration of the mounting bar 50 and/or springs 52 may be used in conjunction with the USB 3.0 standard or other suitable standards. As illustrated in Figures 17, 19, 21, 23, 25, 27, 30, and 32, one of ordinary skill in the relevant art will understand that the mounting bar 50 may be positioned in any suitable orientation relative to the substrate 12.

The mounting bar 50 may then electrically couple the substrate 12 to the corresponding connector via the coupling projections 60. In these features, a plurality of apertures 62 are positioned in the component surface 24 adjacent the plurality of connection fingers 20. The coupling projections 60 are configured to extend through the apertures 62 when the springs 52 are in an uncompressed position.

When the connector 14 is inserted within the corresponding USB 3.0 connector (not shown), the USB 3.0 connector presses against the coupling projections 60, in turn applying a compressive force to the springs 52. When the springs 52 are compressed by the USB 3.0 connector, the spring-loaded design of each spring 52 then applies a force to create a firm electrical coupling between the USB 3.0 connector and each coupling projection 60 when the connector 14 is inserted within the corresponding USB 3.0 connector.

In the various features described herein, an outer casing 66 may be applied to enclose the assembled substrate 12 and components. In some features, a sealant may be applied to the mounting bar 50 to prevent the case material from flowing into the mounting bar 50 and the internal assembly of the device 10 during the assembly process. Specifically, glue or epoxy may be used to ensure a tight connection and avoid having the case material introduced into the space below the contact bar 22.

In the features where the mounting bar 50 is mounted on the component surface 24, the mounting bar 50 does not form a projection on the otherwise substantially flat connection surface 26. In some features, the thickness of the mounting bar 50 may not exceed the thicknesses of the other components positioned on the component surface 24, thus allowing at least the mounting bar 50 portion of the connector 14 to be incorporated into the existing dimensions of the device 10. Moreover, the retractable design of the contact springs 52 may allow the coupling projections 60 to completely retract within the outer casing 66 when the device 10 is inserted within a corresponding USB 2.0 connector.

Furthermore, by incorporating the mounting bar 50 within the outer casing 66, the manufacturing throughput is improved because the device 10 is assembled as one single part, which is easy to handle by pick and place assembly machines.

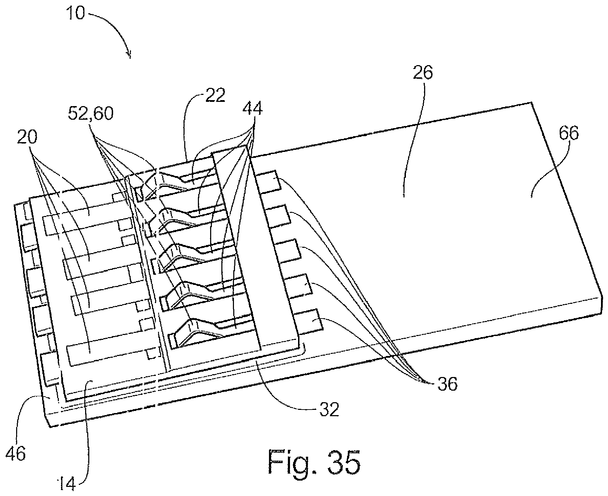

In other features, such as the features shown in Figure 35, the connector 14 may comprise a combination of the contact bar 22 and the springs 52 discussed above. In these features, the connection fingers 20 may be mounted to or embedded within the cover 32 of the contact bar 22 and electrically coupled to the substrate 12. The cover 32 may also include the plurality of apertures 44 positioned adjacent and/or behind the connection fingers 20. Each spring 52 may be mounted to the contact bar 22 so that the coupling projection 60 extends through each aperture 44 when the springs 52 are in an uncompressed position. Each spring 52 may also include the connection pad 36, which may be integrally formed with the spring 52, soldered or otherwise electrically coupled to the spring 52 in a suitable matter that allows the coupling projection 60 to electrically couple to the substrate 12.

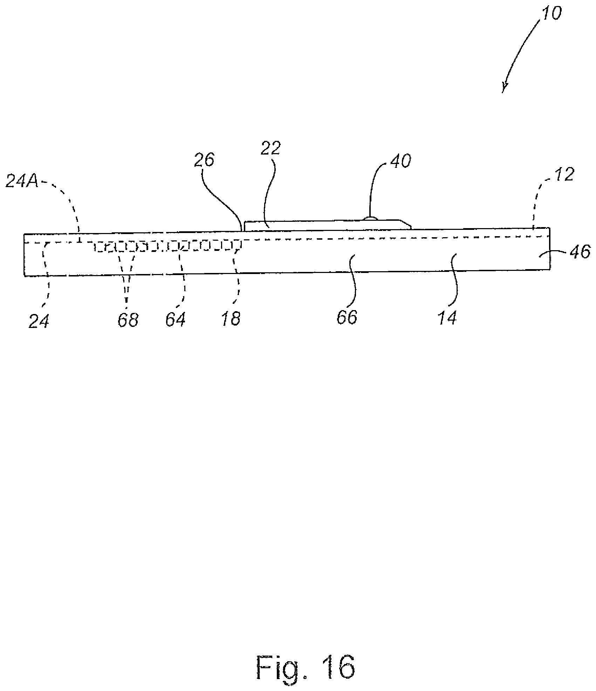

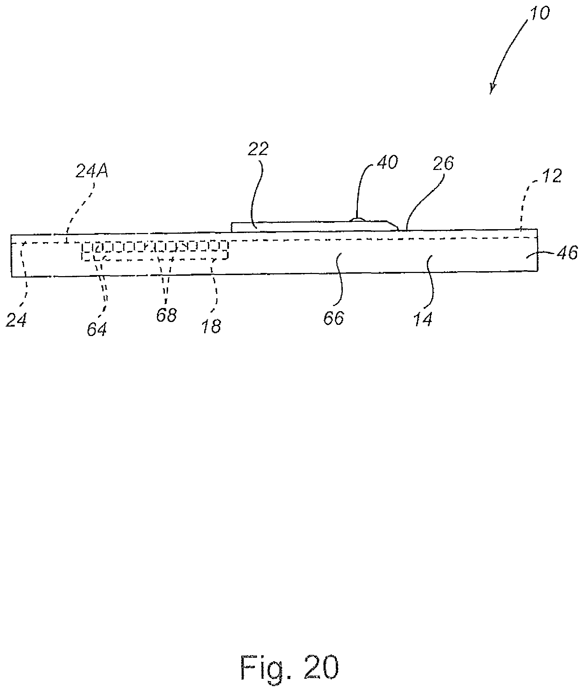

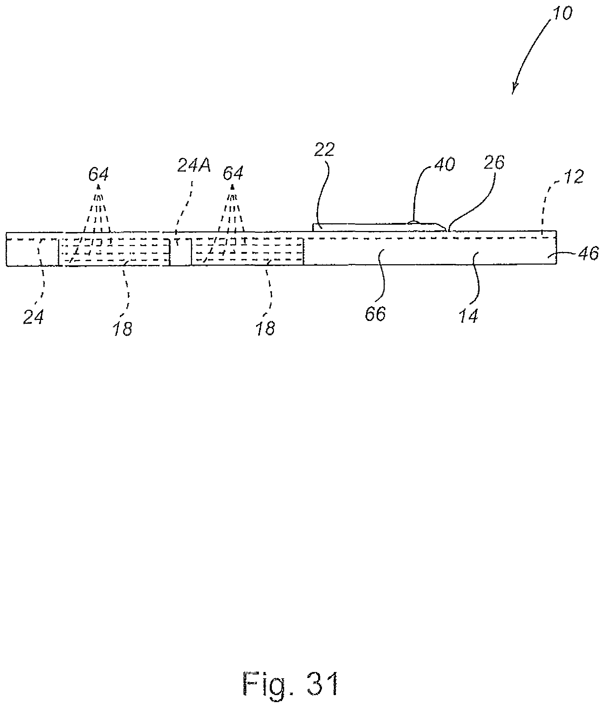

In these features, such as the features illustrated in Figures 16-32, the memory die stack 18 may include at least one die 64. For example, in Figures 16-19 and 22-23, each memory die stack 18 can include a single die 64. The memory die stacks 18 shown in Figures 20-21 and 24-30 can include two dies 64 in each memory die stack 18. Each memory die stack 18 shown in Figures 31-34 may include four dies 64 within each memory die stack 18. One of ordinary skill in the relevant art will understand that the memory die stack 18 may include 1, 2, 4, or any suitable number of dies 64. Each die 64 may include connectors 68 that connect the die 64 to a memory channel 70, which in turn connects the die 64 to the controller 16. In some features, the design may include a pair of memory channels 70, also known as dual channel processing, wherein each die 64 (in a memory die stack 18 having two dies 64) is connected to each memory channel 70. With a dual channel configuration, the controller 16 may access each die 64 together or separately. As a result, transactions may be executed twice as fast with dual channel processing.

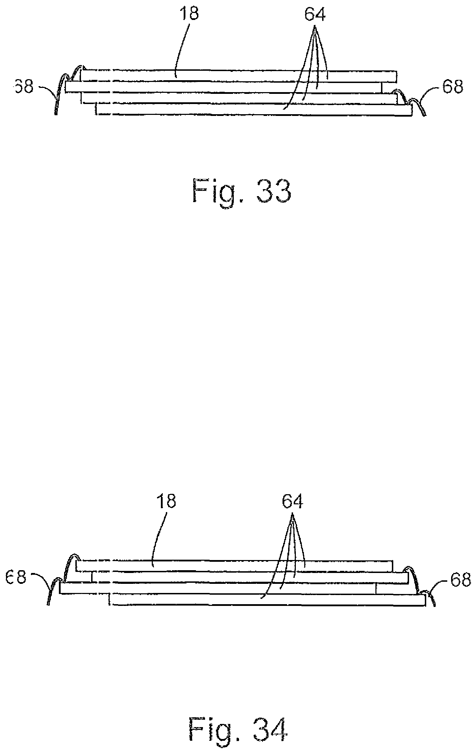

In the memory die stacks 18 that include more than one die 64, the dies 64 may be arranged within the memory die stack 18 in a variety of stacking patterns. For example, as shown in Figures 33-34, the dies 64 may be arranged in a stair step pattern (Figure 33), an alternating pattern (Figure 34), a straight stack, or other suitable stacking arrangements. Any suitable arrangement of dies 64 may be used that allow the connectors 68 from each die 64 to reach the memory channel 70. In some features, such as the features shown in Figures 20-21, 24-30, and 34, each die 64 may be rotated 180 degrees from each adjacent die 64. By stacking the dies 64 in a rotated orientation, the heat distribution is improved because the heat generating components (such as the connectors 68) are not adjacent one another.

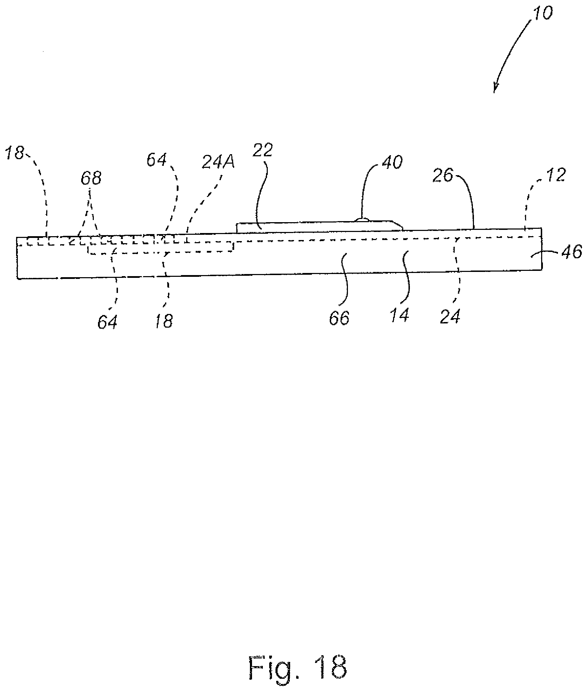

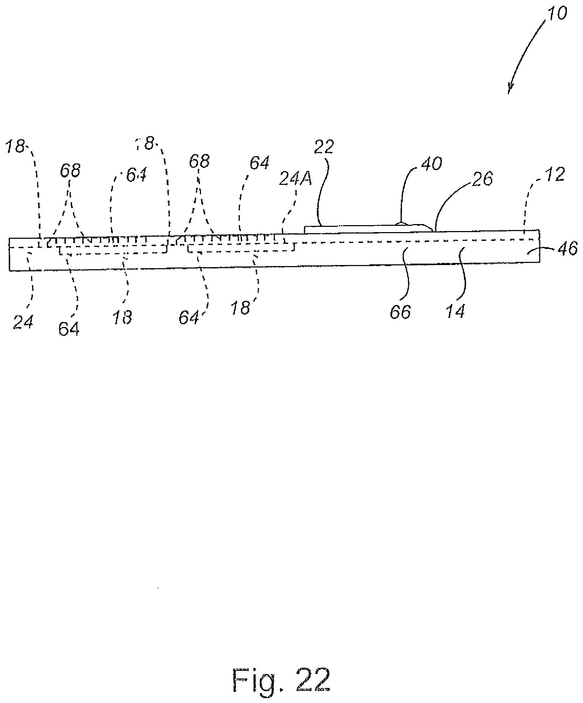

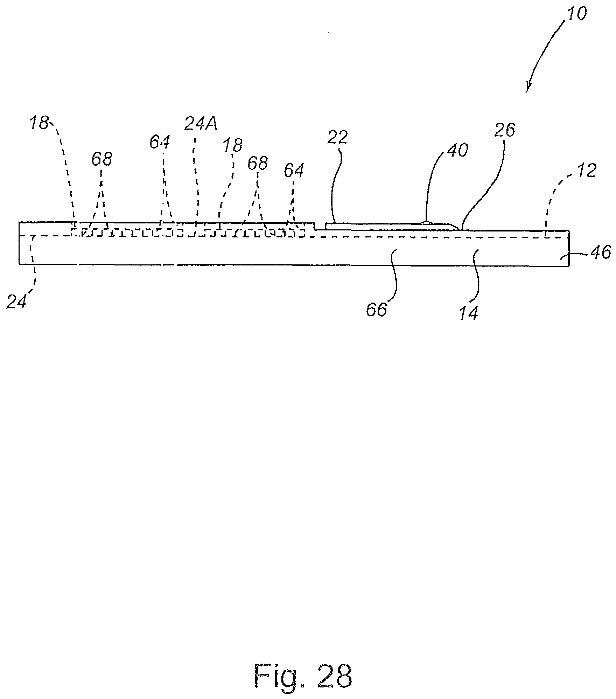

In some features, such as the features shown in Figures 16-17 and 20-21, a single memory die stack 18 may be mounted to and electrically coupled to the substrate 12. In other features, such as the features shown in Figures 18-19, 24-28, and 31-32, the device 10 may comprise two memory die stacks 18. In yet other features, such as the features shown in Figures 22-23 and 29-30, the device 10 may comprise four memory die stacks 18. In some features, the memory die stacks 18 may be arranged opposite one another so that the memory die stacks 18 are equally distributed on the component surface 24 and an opposing component surface 24A (Figures 18-19, 22-25, 29-30), may be positioned on the component surface 24 only (Figures 16-17, 20-21, 26-27, and 31-32), or may be positioned on the opposing component surface 24A only (Figure 28). However, one of ordinary skill in the relevant art will understand that any suitable location and distribution of memory die stacks 18 on the component surface 24 and the opposing component surface 24A may be utilized to achieve the desired performance of the device 10.

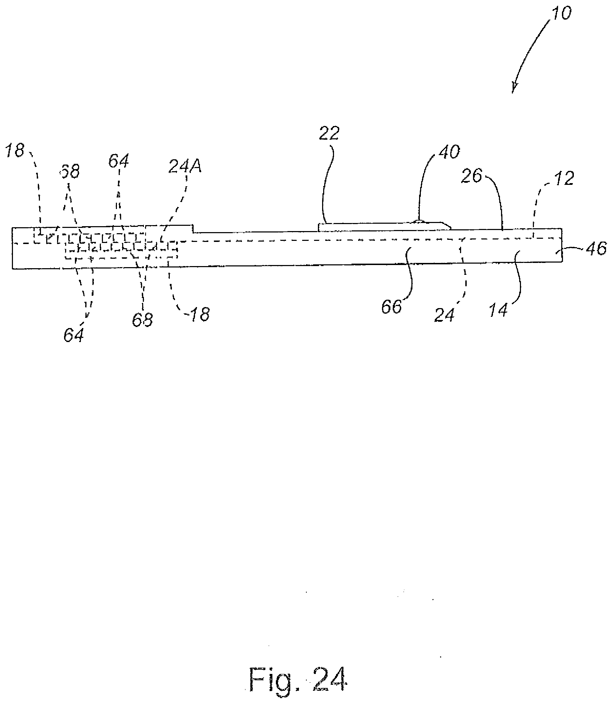

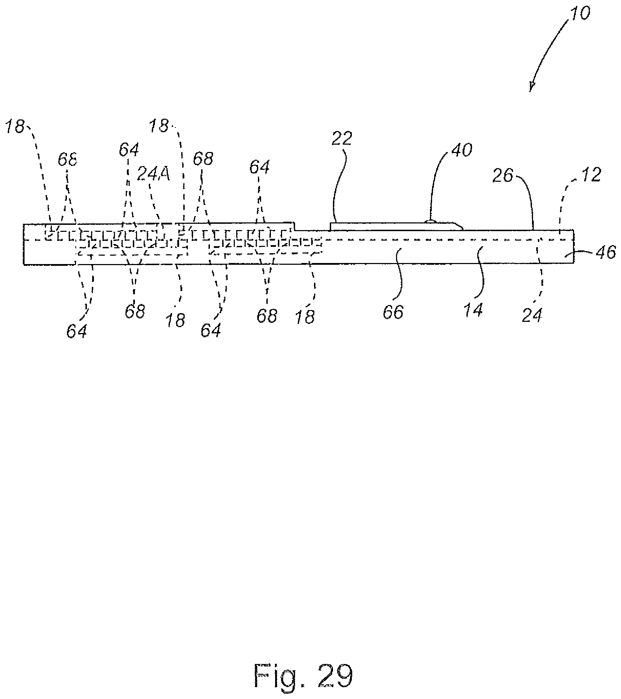

The inclusion of the additional memory die stacks 18 provides additional data speed for the device 10. In the features shown in Figures 24-28, which include two memory die stacks 18 in a dual channel configuration (with each memory die stack 18 having two dies 64), the use of two memory die stacks 18 increases the design from a two-channel to a four-channel operation, which approximately doubles the data speed. In other features shown in Figures 29-30, which include four memory die stacks 18 in a dual channel configuration (each memory die stack 18 having two dies 64), the design has an eight-channel operation, which approximate quadruples the data speed.

Alternatively, as shown in Figures 31-32, an eight-channel operation may be achieved through the use of two memory die stacks 18 (with each memory die stack 18 having four dies 64) and a separate memory channel 70 for each die 64. In these features, in order to minimize the height of the connectors 68, the connectors 68 between each die 64 to the memory channel 70 may pass through the other dies 64 located between the die 64 and the memory channel 70.

In the features where two memory die stacks 18 are positioned adjacent one another (either on the component surface 24 or the opposing component surface 24A), the dies 64 in each memory die stack 18 can be stacked onto each other in an overlapping arrangement to conserve space on the substrate 12.

One of ordinary skill in the art will understand that any suitable number and configurations of dies 64 and memory die stacks 18 may be used to achieve the desired data speed and compact design of the device 10.

The foregoing is provided for purposes of illustrating, explaining, and describing features of the present invention. Further modifications and adaptations to these features will be apparent to those skilled in the art and may be made without departing from the scope of the invention.

## Claims

1. An external storage device comprising:
(a) a substrate (12);
(b) a controller (16) electrically coupled to the substrate;
(c) at least one memory die stack (18) electrically coupled to the substrate;
(d) a connector (14) electrically coupled to the substrate;
(e) wherein the external storage device is configured to support at least two USB standards with interfaces that are mechanically different;
(f) wherein the connector (14) comprises springs (52) and connection fingers (20) electrically coupled to the substrate (12); **characterised in that**
(g) the connector (14) comprises a cover (32) having a plurality of apertures (44) positioned adjacent and/or behind the connection fingers (20);
(h) each spring (52) having a coupling projection (60) that extends through each aperture (44) when the springs (52) are in an uncompressed position; and **in that** the connection fingers (20) are embedded within the cover (32).

2. An external storage device as claimed in claim 1, further comprising a plurality of coupling points (28) mounted on the connection surface of the substrate configured to couple to a contact bar (22).

3. An external storage device stick as claimed in claim 2, wherein the contact bar (22) is mounted to a component surface (24) of the substrate (12).

4. An external storage device as claimed in claim 3, wherein the contact bar (22) is substantially enclosed by an outer casing (66) that surrounds the substrate (12).

5. An external storage device as claimed in claim 3, wherein the contact bar (22) further comprises a cover (32).

6. An external storage device as claimed in any of claims 1 to 5, wherein the at least one memory die stack (18) is mounted to a component surface (24) or a connection surface (26) of the substrate (12).

7. An external storage device as claimed in claim 6, further comprising a plurality of memory die stacks (18), wherein at least one of the plurality of memory die stacks is mounted to a connection surface (26) of the substrate (12), and at least one of the plurality of memory die stacks is mounted to a component surface (24) of the substrate.

8. An external storage device as claimed in claim 7, wherein each of the plurality of memory die stacks (18) comprises a plurality of dies (64).

9. An external storage device as claimed in claim 8, wherein the plurality of dies (64) of at least two of the plurality of memory die stacks (18) are stacked in an overlapping arrangement.

10. An external storage device as claimed in any of claims 1 to 9, wherein the external storage device (10) comprises substantially flat surfaces on all sides.

## Patentansprüche

1. Externes Speichergerät, das Folgendes umfasst:
(a) ein Substrat (12),
(b) eine Steuereinrichtung (16), die elektrisch mit dem Substrat verbunden ist,
(c) wenigstens einen Speicherchip-Stapel (18), der elektrisch mit dem Substrat verbunden ist,
(d) einen Verbinder (14), der elektrisch mit dem Substrat verbunden ist,
(e) wobei das externe Speichergerät dafür konfiguriert ist, wenigstens zwei USB-Standards mit Schnittstellen, die mechanisch unterschiedlich sind, zu unterstützen,
(f) wobei der Verbinder (14) Federn (52) und Verbindungsfinger (20), die elektrisch mit dem Substrat (12) verbunden sind, umfasst,
**dadurch gekennzeichnet, dass**
(g) der Verbinder (14) eine Abdeckung (32) umfasst, die mehrere Öffnungen (44) hat, die angrenzend an die Verbindungsfinger (20) und/oder hinter denselben angeordnet sind,
(h) jede Feder (52) einen Kupplungsvorsprung (60) hat, der sich durch jede Öffnung (44) erstreckt, wenn sich die Federn (52) in einer nicht zusammengedrückten Stellung befinden,
und dadurch, dass die Verbindungsfinger (20) innerhalb der Abdeckung (32) eingebettet sind.

2. Externes Speichergerät nach Anspruch 1, das ferner mehrere Kupplungspunkte (28) umfasst, die auf der Verbindungsfläche des Substrats montiert sind, dafür konfiguriert, sich mit einer Kontaktschiene (22) zu verbinden.

3. Externes Speichergerät nach Anspruch 2, wobei die Kontaktschiene (22) an einer Bauteilfläche (24) des Substrats (12) montiert ist.

4. Externes Speichergerät nach Anspruch 3, wobei die Kontaktschiene (22) im Wesentlichen durch ein äußeres Gehäuse (66) umschlossen wird, welches das Substrat (12) umgibt.

5. Externes Speichergerät nach Anspruch 3, wobei die Kontaktschiene (22) ferner eine Abdeckung (32) umfasst.

6. Externes Speichergerät nach einem der Ansprüche 1 bis 5, wobei der wenigstens eine Speicherchip-Stapel (18) an einer Bauteilfläche (24) oder einer Verbindungsfläche (26) des Substrats (12) montiert ist.

7. Externes Speichergerät nach Anspruch 6, das ferner mehrere Speicherchip-Stapel (18) umfasst, wobei wenigstens einer der mehreren Speicherchip-Stapel an einer Verbindungsfläche (26) des Substrats (12) montiert ist und wenigstens einer der mehreren Speicherchip-Stapel an einer Bauteilfläche (24) des Substrats montiert ist.

8. Externes Speichergerät nach Anspruch 7, wobei jeder der mehreren Speicherchip-Stapel (18) mehrere Chips (64) umfasst.

9. Externes Speichergerät nach Anspruch 8, wobei die mehreren Chips (64) von wenigstens zwei der mehreren Speicherchip-Stapel (18) in einer überlappenden Anordnung gestapelt sind.

10. Externes Speichergerät nach einem der Ansprüche 1 bis 9, wobei das externe Speichergerät (10) im Wesentlichen flache Flächen auf allen Seiten umfasst.

## Revendications

1. Périphérique de stockage externe comprenant :
(a) un substrat (12) ;
(b) un contrôleur (16) électriquement couplé au substrat ;
(c) au moins un empilement de puces de mémoire (18) électriquement couplées au substrat ;
(d) un connecteur (14) électriquement couplé au substrat ;
(e) le périphérique de stockage externe étant configuré pour supporter au moins deux normes USB avec des interfaces qui sont mécaniquement différentes ;
(f) le connecteur (14) comprenant des ressorts (52) et des pattes de connexion (20) électriquement couplés au substrat (12) ;
**caractérisé en ce que**
(g) le connecteur (14) comprend un couvercle (32) ayant une pluralité d'ouvertures (44) positionnées adjacentes et/ou derrière les pattes de connexion (20) ;
(h) chaque ressort (52) a une saillie de couplage (60) qui s'étend à travers chaque ouverture (44) lorsque les ressorts (52) sont dans une position non comprimée ;
et **en ce que** les pattes de connexion (20) sont intégrées à l'intérieur du couvercle (32).

2. Périphérique de stockage externe selon la revendication 1, comprenant en outre une pluralité de points de couplage (28) montés sur la surface de connexion du substrat configurés pour être couplés à une barre de contact (22).

3. Clé périphérique de stockage externe selon la revendication 2, la barre de contact (22) étant montée sur une surface de composant (24) du substrat (12).

4. Périphérique de stockage externe selon la revendication 3, la barre de contact (22) étant sensiblement entourée par un boîtier externe (66) qui entoure le substrat (12).

5. Périphérique de stockage externe selon la revendication 3, la barre de contact (22) comprenant en outre un couvercle (32).

6. Périphérique de stockage externe selon l'une quelconque des revendications 1 à 5, l'au moins un empilement de puces de mémoire (18) étant monté sur une surface de composant (24) ou une surface de connexion (26) du substrat (12).

7. Périphérique de stockage externe selon la revendication 6, comprenant en outre une pluralité d'empilements de puces de mémoire (18), au moins l'un de la pluralité d'empilements de puces de mémoire étant monté sur une surface de connexion (26) du substrat (12) et au moins l'un de la pluralité d'empilements de puces de mémoire étant monté sur une surface de composant (24) du substrat.

8. Périphérique de stockage externe selon la revendication 7, chacun de la pluralité d'empilements de puces de mémoire (18) comprenant une pluralité de puces (64).

9. Périphérique de stockage externe selon la revendication 8, la pluralité de puces (64) d'au moins deux de la pluralité d'empilements de puces de mémoire (18) étant stockées dans un agencement de chevauchement.

10. Périphérique de stockage externe selon l'une quelconque des revendications 1 à 9, le périphérique de stockage externe (10) comprenant des surfaces sensiblement plates sur tous les côtés.
